# EUROPEAN PATENT APPLICATION

(11) **EP 2 995 448 A1**
(43) Date of publication of application: **16.03.2016**
(21) Application number: 14003129.5
(22) Date of filing: 10.09.2014
(51) Int. Cl.: B32B 5/18, B32B 27/36, C08J 9/08, C08K 5/1515

(54) **Snap ability modifier for biodegradable polyesters**

(71) Applicant: Clariant International Ltd., 4132 Muttenz (CH); Compagnie Gervais Danone, 75017 Paris (FR)
(72) Inventor: Grösseling, Mirco, 22049 Hamburg (DE); Wolf, Jürgen, 22926 Ahrensburg (DE); Chivrac, Frédéric, 75014 Paris (FR)
(74) Representative: Hütter, Klaus

(57) **Abstract**

The invention relates to an article comprising a monolayer or multilayer thermoplastic material, said material comprises
(i) 38.00 to 99.95 %, preferably 67.00 to 99.9 %, more preferably 57.00 to 99.85 %, by weight of polylactic acid,
(ii) 0.05 to 4.90 %, preferably 0.10 to 2.90 %, more preferably 0.15 to 2.00 %, even more preferably 0.2 to 1.00 %, most preferably 0.25 to 0.75 %, by weight of an epoxidized vegetable oil;
(iii) 0 to 60.00 %, preferably 0 to 40.00 %, more preferably 0 to 30.00 %, by weight of further additives selected from the group consisting of impact modifiers, plasticisers, crosslinking agents, foaming agents, fillers, colorants, stabilizers, lubricants, and mixtures thereof,

the weight percentages being relative to total weight of the monolayer or multilayer thermoplastic material and adding up to 100 %.

## Description

Today for packaging applications petroleum based plastics like polyolefines, styrenic polymers, polyethylene terephtalate, polybutylene terephtalate and polyvinyl chloride are widely used. Depending on the application, chosen types of polymers have benefits in terms of costs or technical properties like impact strength, process ability, gas barrier function and others.

However, discussions about natural resources and global warming let raw materials that are non petroleum-sourced and biodegradable get more and more into the focus of packaging industry. Those biosourced and more sustainable materials appear to be an alternative to conventional materials for packaging.

In the past compared to petroleum-based plastics different drawbacks like-costs, availability and technical limitations did avoid bioplastics from having a higher acceptance in the plastic industry. The added value of sustainabilty could not compensate disadvantages for plastics converters. Especially for sophisticated applications like film extrusion and thermoforming the available alternatives were not sufficient.

Due to risen availability and, compared to other non-oil-based polymers, technical properties like good impact strength, polylactic acid (PLA) has become an alternative in packing applications and tends to substitute polymers like polystyrene and polyethylene. PLA has some properties, which are comparable to these polymers like transparency and low migration tendency. Potential applications for PLA-Packaging are often those that have challenging manufacturing processes like thermoforming of extruded sheets. Cracks through the article, scratches on the surface and troubles during processing of the material can be the result.

To prevent thermoplastics from damaging, polymer modifiers are widely used to ensure impact modification and reduce brittleness. These modifiers are often thermoplastic or non-thermoplastic elastomers (plastomers) or core-shell modifiers. These consist of an elastomeric core and an acrylic shell. Conventional food packages, for example for beverages, yogurt or curd, are often thermoformed, extruded sheets to produce containers, such as cups and beakers. These containers, often made from PS and PET, can be comprised in groups of several attached containers (also referred to as "multipacks"), segmented with a notch or a precut line to have a predetermined breaking point. This breaking point ensures a breaking of the segment with the right angle and force and without splinters or cuts in the direction of the container such as a cup. This behavior shall hereinafter be called "snap ability". In other embodiments the container is a single container with edges corresponding to a full cut line.

Containers such as cups made from polystyrene do hardly need an impact modifier for the application of thermoformed and precut containers as cups. Their snap ability can be controlled by the depth of the notch without creating any damage to the beaker.

Containers, such as cups, made from PLA tend to be too brittle and edges after cutting or separating along a precut line are not clean: crazes are formed at borders, and/or there are breaks in directions perpendicular to precut lines. There is a need for articles allowing clear and straight edges upon cutting and/or precutting. There is as well a need for articles allowing good snap ability.

US-5908918 A claims the use of degradable impact modifier and a degradable plasticizer providing good impact modification and flexibility of packaging films while maintaining biodegradability of the composition. However, such formulation does not provide the desired haze level and tests have shown that snap ability is not corresponding with a high level of impact modification. In some embodiments epoxidized soybean oil is used as plasticizer, in amounts of at least 5 % by weight.

In WO-2008051443 A1 polylactide resins are blended with acrylic core-shell rubber particles to give a good impact strength and transparency. This is achieved with the right dispersion of the particles that have a certain T_{g} and refractive index. However, these compositions are widely known for its efficiency but are not bio sourced and can spoil degradability. There is however a need for additives that are more efficient than core-shell compounds.

US-20110082224 A1 also claims application of core-shell impact modifiers with an average particle size of greater that 250 nm to biodegradable polyester. The modified biodegradable polyester has good impact properties. In some application more transparency is however needed. There is a need for additives that are more efficient than core-shell compounds.

In CN-103146160 A a method is disclosed to copolymerize a biodegradable polyester. These copolymers are however complex and expensive compounds. There is a need to have a cheap and practicable way to modify the commercially available biodegradable polyester preferably with a masterbatch that contains an additive providing the mandatory properties like transparency and snap ability modification.

CN-102321287 B contents the manufacturing process and composition of a biodegradable polyethylene film obtained by mixing with polyethylene, 10 to 30 % by weight of polylactic acid, at least 3 % by weight of epoxy vegetable oil and a compatibilizer. This so described film with a thickness of 50 - 100 µm does not only have a biodegradability but shows also good tensile strength and impact modification.

Document US-5798435 discloses copolymers obtained by copolymerization of lactic acid and epoxidized oils. There is a need of material that do not necessitate such copolymerizations. Meanwhile the document discloses on example 17 and 18 compositions comprising 0.2 % or 0.5 % of epoxidized soybean oil blended in polylactic acid. These composition are tested viscosity and for extrusion sticking in injection molding. Monolayer or multilayer articles are however not considered for these compositions, and potential properties thereof are not suggested.

Document WO-2014/067923 describes multilayer articles based on PLA, comprising core/shell polymers impact modifiers. The articles show a good snap ability with amounts of impact modifiers such as 1 % by weight. Core/shell polymers are however expensive and are not biobased. There is a need for additives that are more efficient (providing an increased effect at similar concentration and/or an equivalent effect at lower concentration). Meanwhile core/shell polymeric impact modifiers result in opaque articles. There is a need for articles that can be transparent.

There is a need for compounds and articles addressing at least one of the needs or problems mentioned above. Furthermore, there is a need in providing an additive which is biobased allowing a good snap ability in polylactic acid sheets.

Customary impact modifiers that are used with a concentration where they provide a minimum of impact modifying effect often lead to a non breaking behavior and too soft sheets.

Furthermore a modifier is needed that still provides transparency and is biobased.

The present invention relates to an article comprising a monolayer or multilayer thermoplastic material, said material comprises
(i) 38.00 to 99.95 %, preferably 67.00 to 99.90 %, more preferably 57.00 to 99.85 %, by weight of polylactic acid,
(ii) 0.05 to 4.90 %, preferably 0.10 to 2.90 %, more preferably 0.15 to 2.00 %, even more preferably 0.20 to 1.00 %, most preferably 0.25 to 0.75 %, by weight of an epoxidized vegetable oil;
(iii) 0 to 60.00 %, preferably 0 to 40.00 %, more preferably 0 to 30.00 %, by weight of further additives selected from the group consisting of impact modifiers, plasticisers, crosslinking agents, foaming agents, fillers, colorants, stabilizers, lubricants, and mixtures thereof,
the weight percentages being relative to total weight of the monolayer or multilayer thermoplastic material and adding up to 100 %.

The present invention further relates to an article comprising a monolayer or multilayer thermoplastic material, said material consisting of, or essentially consisting of:
(i) 38.00 to 99.95 %, preferably 67.00 to 99.90 %, more preferably 57.00 to 99.85 %, by weight of polylactic acid,
(ii) 0.05 to 4.90 %, preferably 0.10 to 2.90 %, more preferably 0.15 to 2.00 %, even more preferably 0.20 to 1.00 %, most preferably 0.25 to 0.75 %, by weight of an epoxidized vegetable oil;
(iii) 0 to 60.00 %, preferably 0 to 40.00 %, more preferably 0 to 30.00 %, by weight of further additives selected from the group consisting of impact modifiers, plasticisers, crosslinking agents, foaming agents, fillers, colorants, stabilizers, lubricants, and mixtures thereof,
the weight percentages being relative to total weight of the monolayer or multilayer thermoplastic material and adding up to 100 %.

Expediently, the further additives, if present, are present in amounts of from 0.01 to 60.00 %, preferably from 0.1 to 40.00 %, more preferably 0.25 to 30.00 % by weight, based on the total weight (100 %) of the monolayer or multilayer thermoplastic material.

### Definitions

In the present application a non-foamed polylactic acid (PLA) material refers to polylactic acid substantially depleted of gas inclusions, either directly in the PLA or in microspheres embedded in the PLA. Non-foamed PLA has typically a density of higher than 1.2. Non-foamed PLA is also referred to as "compact PLA".

In the present application a foamed polylactic acid (PLA) material refers to polylactic acid comprising gas inclusions, preferably directly in the PLA, typically as opposed to gas inclusions in microspheres embedded in the PLA. Foamed PLA has typically a density of up to 1.2, preferably of at less than 1.2, preferably of up to 1.1.

In the present application "additives" refer to products that can be added to polylactic acid or other thermoplastic materials.

In the present application the "total stretch ratio" refers to the ratio between the surface of the article opening, corresponding to the thermoforming area of a sheet, and the surface of the developed thermoformed part, corresponding to the surface of the plastic in contact with a mold.

In the present application the "local stretch ratio" or "local draw ratio" refers to the stretch ratio at a local zone of the thermoformed part. The local stretch ratio can be estimated by dividing the local thickness in the thermoformed part by the initial thickness before thermoforming. Non thermoformed parts, such as flanges, typically have this initial thickness.

In the present application snap ability (or snapability) refers to the ability of a part of the article to be divisible along a precut line or notch under flexural solicitation. A particular good snap ability for example allows a break along a precut line or along a notch in not more than two flexural solicitations, preferably in one flexural solicitation, wherein the precut line or the notch has a minimum (precut) depth of less than 75 %, preferably less than 65 %, of the total thickness of the sheet containing the notch or the precut line.

It was found that naturally sourced, epoxidized oils, preferably epoxidized vegetable oils, when used as a modifier in thermoformed PLA-sheets, provide a favorable snap ability as defined before and a high transparency.

In one aspect, the present invention relates to the use of an epoxidized vegetable oil as a snap ability modifier in optionally thermoformed polylactic acid sheets. Polylactic Acid (PLA) is a thermoplastic polymer made from renewable resources. It has a significant biodegradability. PLA plastic sheets are often used to make thermoformed containers.

PLA is known to exist in several distinct forms due to the chiral nature of its monomer unit lactic acid. PLA as used herein includes the homopolymer poly(L-lactic acid) wherein the structural unit of lactic acid is L-lactic acid, the homopolymer poly(D-lactic acid) wherein the structural unit of lactic acid is D-lactic acid, poly(DL-lactic acid) wherein the structural unit of lactic acid is a mixture of L-lactic acid and D-lactic acid in varying ratios.

In the present invention PLA may be obtained by any method known in the art. Typically used methods include ring-opening polymerisation of lactide monomers, direct polycondensation of lactic acid and dehydration condensation of lactic acid.

The weight average molecular weight of the polylactic acid preferably ranges from about 50,000 to 500,000 daltons, more preferably from 100,000 to 300,000 daltons.

Vegetable oils are commonly defined as esters from glycerol, so called triglycerides, extracted from a plant or plant seeds. The triglycerides can derive from saturated or unsaturated fatty acids esters with a chain length from C₆ to C₂₂. Epoxidized vegetable oils in the sense of the present invention are for example epoxidized soybean oil (ESBO), epoxidized methyl soyate MSO, epoxidized linseed oil, epoxidized tall oil, epoxidized peanut oil, epoxidized castor oil, epoxidized coconut oil, epoxidized palm oil, epoxidized corn oil, epoxidized safflower oil, or a mixture thereof. The most preferred vegetable epoxidized oil is ESBO. ESBO can be manufactured from soybean oil, which is extracted from the seeds of the soybean.

In the sense of the present invention epoxidized vegetable oils refer to compounds that are not copolymerized with lactic acid. Furthermore, in the monolayer or multilayer thermoplastic material of the present invention polylactic acid and the epoxidized vegetable oil is a blend and not copolymerized with each other.

The epoxidized vegetable oil is typically used in an amount which yields to good snap ability, impact strength and/or transparency. Preferably, the amount of the epoxidized vegetable oils for use as snap ability modifier in optionally thermoformed polylactic acid sheets is between 0.05 to 4.90 % by weight, preferably 0.10 to 2.90 % by weight, more preferably 0.15 to 2.00 % by weight, even more preferably 0.20 to 1.00 % by weight, most preferably 0.25 to 0.75 % by weight, relative to the total weight of the optionally thermoformed polylactic acid sheet.

The epoxidized vegetable oil can be in the form of a masterbatch, wherein it is dispersed in a polymeric matrix, typically a thermoplastic matrix, for example PLA, or a polymer of ethylenically unsaturated monomers, such as an ethylene vinyl acetate copolymer. The matrix does not qualify herein as an additive. Such masterbatches can comprise for example from 5 % to 90 % by weight of polymeric matrix, preferably from 10 % to 60 %. Such masterbatches can comprise further additives, for example additives detailed below. In a particular embodiment the masterbatch, beyond the matrix and the naturally sourced epoxidized oil is free from further additives and/or fillers.

In a specific embodiment, the material comprises, or consists of, or essentially consists of:
(i) 88.00 to 99.85 % by weight of polylactic acid,
(ii) 0.15 to 2.00 % by weight of an epoxidized vegetable oil;
(iii) 0 to 10.00 % by weight of further additives selected from the group consisting of impact modifiers, plasticisers, crosslinking agents, foaming agents, fillers, colorants, stabilizers, lubricants, and mixtures thereof,
the weight percentages being relative to total weight of the monolayer or multilayer thermoplastic material and adding up to 100 %.

In a preferred embodiment, the invention relates to a multilayer article, comprising (A) at least one layer of non-foamed polylactic acid and (B) at least one layer of foamed polylactic acid, wherein either (A), or (B), or (A) and (B) contain an epoxidized vegetable oil, preferably in amounts of from 0.05 to 4.90 % by weight, preferably 0.10 to 2.90 % by weight, more preferably 0.15 to 2.00 % by weight, even more preferably 0.20 to 1.00 % by weight, most preferably 0.25 to 0.75 % by weight, relative to the weight of the layer or layers containing said epoxidized vegetable oil.

In the present application, the foamed layers can be foamed by foaming agents, preferably endothermic foaming additives also called blowing agents. Suitable blowing agents are those which are commonly known, for example, azodicarbonamides, nitroso compounds, hydrazides and citric acid and citric acid derivatives, their salts and esters, sodium bicarbonate or mixtures thereof in use. Most commonly so called modified azodicarbonamide are used which are azodicarbonamides in conjunction with kickers, such as ZnO, zinc stearate. Also possible are combinations with organic substances such as acids and bases.

Expediently, the foaming agents, if used, are employed in amounts of from 0.1 to 3 %, preferably from 0.25 to 2.5 %, by weight relative to the total weight of the foamed layer.

It is mentioned that the polylactic acid material may comprise cross-linking agents, typically added after polymerization, such as peroxides. In a most preferred embodiment the polylactic acid material does not contain such cross-linking agents. It has been surprisingly found that such cross-linking agents are useless.

The additives can be added in the form of masterbatches, wherein the additive is dispersed in a polymer matrix, for example PLA or a polymer of ethylenically unsaturated monomers, such as an ethylene vinyl acetate copolymer.

The article, comprising foamed and non-foamed layers, can be in the form of a sheet or a film. It has typically a thickness e. It has typically two other dimensions such as a length l and a broadness b. Typically both other dimensions I and b are at least 10 times, preferably at least 100 times the thickness. The plastic sheet or film can typically have a thickness of from 0.1 mm to 5 mm, preferably 0.5 mm to 2 mm, preferably from 0.6 mm to 1 mm. Examples of thicknesses are 0.5 mm, or 0.7 mm, or 0.8 mm, or 0.9 mm, or 1 mm. The broadness can be typically of from 20 cm to 200 cm. The length can be of at least 200 cm. The plastic sheets can be presented as rolls.

In another embodiment, the article comprises a thermoformed part.

The article can comprise mono- or multilayers. It can consist of 2 or 3 layers. It can be for example a two-layer material (layer A)-(layer B). It can be a three-layer material (layer A)-(layer B)-(layer C). It can be a three-layer material (first layer A)-(layer B)- (second layer A). First layer A and second layer A can be identical or different. They are preferably identical. The article preferably comprises at least 19 % by weight, preferably at least 38 % by weight of layer B.

The amounts of the layers by thickness along the article thickness can correspond to the following profile:
- layer(s) A: from 10 % to 75 %,
- layer B: from 25 to 90 %,
the total being 100 % of the thickness.

In a preferred embodiment the amounts of the layers by distance along the article thickness can correspond to the following thickness profile:
- first layer A: from 5 to 37.5 %,
- layer B: from 25 to 90 %,
- second layer A: from 5 to 37.5 %,
the total being 100 % of the thickness.

The amounts of the layers by weight of the layers can be as follows:
- layer(s) A: from 12.4 % to 93 %,
- layer B: from 19 % to 68.4 %,
the total being 100 % by weight.

In a preferred embodiment the amounts by weight is as follows:
- first layer A: from 6.2 % to 46.5 %,
- layer B: from 19 % to 68.4 %,
- second layer A: from 6.2 to 46.5 %,
the total being 100 % by weight.

In a preferred embodiment the foamed polylactic acid material has a density of from 0.5 to 1.2, preferably from 0.75 to 1.1. The foaming additive and the amount thereof can be selected thereto. In a preferred embodiment the foamed polylactic acid material comprises from 0.1 to 5 % by weight, preferably from 1 % to 4 % of expanded microspheres. In a preferred embodiment the article (including all the layers) has a density of from 0.75 to 1.2, preferably from 0.75 to lower than 1.2 or to lower than 1.0.

The thermoformed part preferably has a stretch ratio of at least 2.5, preferably at least 3, preferably at least 4, preferably at least 5. The article can comprise a part that has not undergone any stretch, said part being considered herein as a non-thermoformed part. The article can be typically obtained by thermoforming a plastic sheet in the material.

The thermoforming is a process known by the one skilled in the art. It typically comprises stretching under heating a plastic material such as a sheet, typically by applying in a mold cavity mechanical means such as plugs and/or by aspiration. The mechanical means can optionally be enhanced by applying a gas under pressure.

The thermoformed part of the article can have a thickness varying in a range of from 50 µm to 2 mm, preferably from 60 µm to 800 µm, preferably from 70 µm to 400 µm.

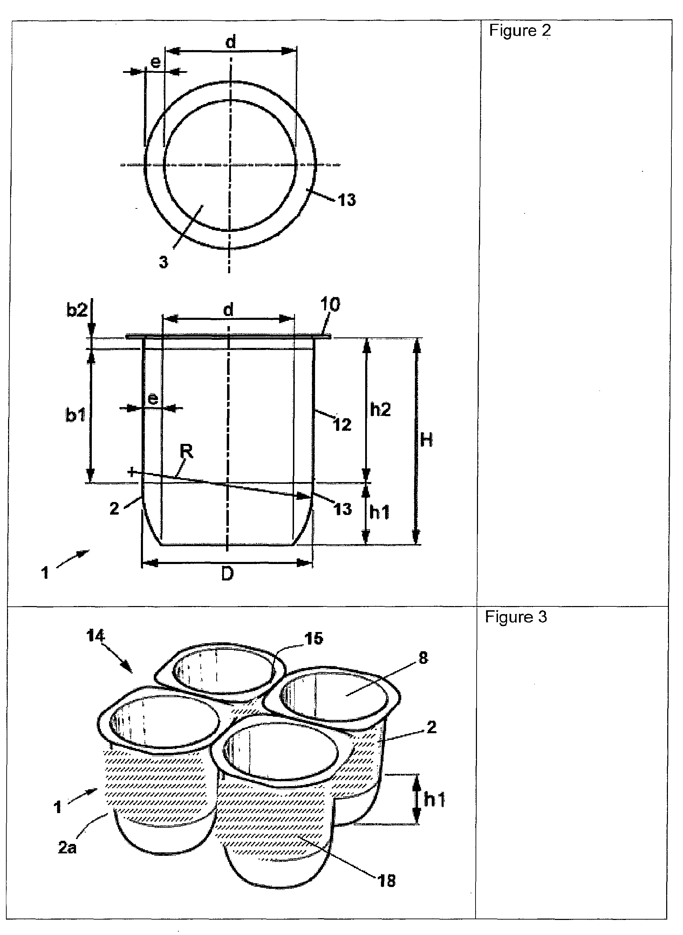

The material and process finds particular interest in articles presenting at least one or several of the following features as shown in Figures 2, 3 and 4:
- the article is a container (1) having a hollow body (2) and optionally at least one flange (10), the hollow body defining said thermoformed part, the hollow body being provided with an opening (8);
- the hollow body (2) is at least partially covered by a banderole;
- the hollow body (2) comprises:
   - a bottom (3) at the opposite from the opening (8),
   - a side wall (2a) presenting at least a portion, preferably a lower portion (13), that is not covered by a banderole (18);
- the opening (8) is a generally circular opening and the bottom (3) has a generally circular outer edge;
- the side wall (2a) has a generally cylindrical upper portion (12) having a height h2 and a lower portion (13) having a height h1, tapering from the upper portion toward the bottom (3) in a curved manner, the upper portion and the lower portion intersecting and interconnecting at a peripheral intersection line;
- the bottom (3) is a planar bottom, and wherein the peripheral intersection line is spaced at a substantially constant distance from the planar bottom, the lower portion (13) having a height h1 corresponding to a minoritary fraction of the height H of the container (1);
- the height h2 of said upper portion (12) is constant, the ratio h2/H being comprised between 3:5 and 6:7, and preferably between 2:3 and 4:5;
- the ratio h2/H is inferior or equal to 3:4;
- the side wall (2a) has a thickness profile such that the average thickness of the lower portion (13) is superior to the average thickness of the upper portion (12); and/or
- the opening (8) has an inner diameter which is inferior to the height H of the container (1) and superior to the height h1 of the lower portion (13).

It is mentioned that articles having a lower portion that is not covered by a banderole and are particularly challenging articles as to manufacture, homogeneity and/or mechanical properties, where the use of the mineral filler find a particular interest. As shown in Figures 2 and 3, the article is preferably a container 1 having a thermoformed part, typically in the form of a hollow body 2, and optionally one or more flanges, for instance an annular flange 10. The hollow body 2 is a thermoformed part that is preferably provided with a continuously rounded section, preferably a circular section. Each flange 10 is typically a non-thermoformed part. In a particular embodiment the hollow body 12 comprises an annular side wall 2a presenting at least one part that is not covered by a banderole 18 or similar decorative strip.

The article can be thermoformed from a sheet having for example a thickness of higher than 300 µm, preferably at least, 500 µm, preferably at least 750 µml, preferably from 750 to 1500 µm. The flange, if present in the article, typically has such a thickness.

Referring to Figures 2, 3 and 4, the hollow body 2 of the container 1 has a side wall 2a extending along a longitudinal axis X from a bottom 3 as far as an open top. The side wall 2a of the body 2 is tubular and is adapted to be covered by a banderole, preferably a cylindrical banderole or a sticker in the upper area A adjacent to the axial opening 18. In the illustrated non-limitative embodiments, this axial opening is a circular opening 8. More generally, it is understood that the longitudinal axis X is here a central axis for the body 2 and the opening 8. Fixing of the banderole 18 is performed in a known manner.

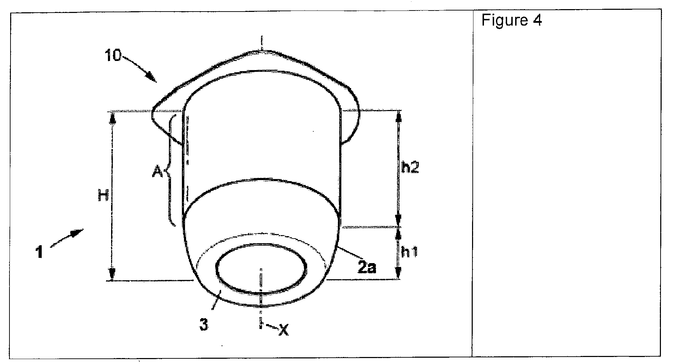

Here, the container 1 comprises a generally planar annular flange 10 integral with the body 2 and connected to the top of the body 2. The flange 10 radially extends between an inner edge that defines the opening 8 and an outer edge that defines the perimeter of the flange 10. The side wall 2a of the body 2 has a generally cylindrical upper portion 12 directly connected to the flange 10 and a lower portion 13 tapering from the upper portion 12 toward the bottom 3, in a curved manner as clearly apparent in the Figure 2 and the Figure 4.

It can be seen that the upper portion 12 and the lower portion 13 intersect and interconnect at a peripheral intersection line that is here circular. Between the substantially circular junction with the flange 10 and the also substantially circular peripheral intersection line, the upper area A defines a generally cylindrical surface for receiving the banderole 18. The banderole 18 may be added by an in-mold labelling method or the like. A small step or shoulder appropriate for maintaining the decorative strip can be present or absent on the side wall 2a at the peripheral intersection line. Such a step does not protrude more than about 0.5 mm from the cylindrical surface defined by the upper portion 12.

The peripheral intersection line is spaced and at a substantially constant distance from the planar bottom 3 as apparent in Figure 4 and the height h1 of the lower portion 13 corresponds to a minoritary fraction of the height H of the container 1. It can be appreciated that the height H of the container 1 is larger than the larger size of the hollow body 2. Preferably, the height h2 of the upper portion 12 is not significantly larger than the outer diameter D of the cylindrical upper portion 12 and may be inferior to this outer diameter D as in the examples of Figures 2 and 4 for instance. According to any point of view around the container 1, the upper area A can be seen as close to a squared shape, the height h2 of the upper portion 12 being slightly inferior (from max. 15 %), equal or not exceeding from more than 10 - 15 % the inner diameter of the opening 8 and/or the outer diameter D or similar apparent width of the body 2. With such an arrangement, the upper portion 12 is particularly useful for displaying information and is typically covered by a rectangular banderole or similar shaped strip arranged in a form of a sleeve label.

Accordingly, the body 2 is higher than wide essentially because of the significant height h1 of the lower portion 13. As this height h1 is significant and for instance comprised between 14 and 24 mm (the height H being for instance not superior to about 65 or 75 mm), the rounded aspect near the bottom 3 is clearly apparent. The lower portion 13 is here continuously rounded from the bottom 3 as far as the peripheral intersection line.

Referring to Figures 2, 3 and 4, the determined area A for attachment of a banderole 18 may have a height b1 not superior to the height h2 of the upper portion 12. An optional small gap thus may exist between the flange 10 and the upper edge, here a rectilinear edge, of the banderole. Here the distance b2 from the flange 10 may be about 1 - 4 mm only. In the illustrated embodiments, the lower edge of the banderole 18 does not extend below the peripheral intersection line so that the lower potion 13 remains uncovered.

The height h2 of the upper portion 12 (of course the height h2 is obtained with h2 = H - h1), which is here constant, may represent a fraction of the height H at least equal to 0.6 and not superior to 0.86. The height h1 of the lower portion 13 is thus inferior to a fraction of about 2/5 of the height H. The ratio h1/H may thus be comprised between 0.14 and 0.4. A ratio h2/H comprised between 2:3 and 4:5 and preferably inferior or equal to 3:4 may be chosen. As a result, the rounding of the lower portion 13 is obtained with a soft transition, i.e. with a large radius of curvature R as shown in Figure 2 and the mechanical properties near the bottom 3 are good without having any specific increase of thickness in the area adjacent the bottom 3. The good mechanical properties such as compression resistance in particular, allow use of a relatively low thickness near the bottom 3 (in the uncovered lower portion 13). The material, comprising the specific combination of (i), (ii), and optionally (iii), is particularly efficient to form the thermoformed part having a low range of thickness.

In food packaging industry, the plastic containers 1 can be stacked on top of one another so as to form stacks which can be layered on a pallet. A loading weight on a pallet may be much more than 500 kg. Such stacks allow the packaging items at the bottom to withstand the compressive load of the packaging items on top. Accordingly, it is of great interest that the uncovered lower portion 13 (not strengthened in any manner) may withstand high compression. Advantageously, the section of the lower portion 13 is circular as apparent in the top of Figure 2. More generally, the hollow body 2 may be provided with a circular section, the upper portion 12 having an outer diameter D.

Still referring to Figures 2, 3 and 4, a good compromise between the height of the upper portion 12 and the height of the lower portion 13, in particular for saving plastic material, is obtained when using a ratio h1/H of 0.25 - 0.27 or 0.27 - 0.29 or 0.29 - 0.31. A ratio h1/H superior to 0.2 is preferred to have a less pronounced angle at the junction between the lower portion 32 and the bottom 3. A ratio h1/H not superior to 0.32 is also preferred to have an upper area A sufficient. Furthermore, it is advantageous having a relatively large upper area A at least because a reduction of thickness can be here essentially obtained in the upper portion 30 of the body 2.

Now referring to Figures 3 and 4, the bottom 3 may be provided with a recess or cavity with a concavity oriented to the exterior. The annular portion of the bottom 3, defined around this cavity, has a diameter inferior to the diameter of the circular opening 8 defined at the top of the body 2. The bottom 3 provided with such cavity, preferably a single centered cavity, has a higher strength for better supporting a compression load. Of course, the bottom 3 may still be considered as a generally planar bottom 3, at least because the bottom 3 has a flat shape and the container 1 is adapted to be maintained vertically when the bottom 3 is in contact with a horizontal base support (the longitudinal axis X being vertical). Of course, the height of the cavity is preferably very small, for instance about 0.5 mm.

Referring to Figure 2, the upper portion 12 can be seen as cylindrical, thus defining a substantially vertical wall of height h2. Substantially vertical is understood with a tolerance angle of 5° compared to vertical. In the examples shown the upper portion 12 cannot be considered as significantly larger at the top of the body 2 because an angle of less than 2° and for instance of about 1° only is defined with respect to the vertical direction of the longitudinal axis X. This angle is so small than the user will naturally interpret the upper portion 12 as being cylindrical. It can also be appreciated that the outer diameter D of the upper portion 12 can be considered as constant because this angle is typically less than 2° and the height h2 of the upper portion 12 is typically inferior to 50 - 70 mm. It will thus be understood that D also represents the outer diameter of the peripheral intersection line.

Referring to Figures 2 and 3, the side wall 2a of the body 2 has a generally circular section in cross-section both in the upper portion 12 and in the lower portion 13. In the upper portion 12, generally circular is understood as encompassing circles and ovals with a ratio between the large dimension in cross section and the small dimension in cross section is less than 1.1.

Now referring to Figures 2 and 4, it can be seen that the upper portion 12 determines an imaginary tube, here an imaginary cylinder, extending longitudinally around said longitudinal axis X and having the outer diameter D. Because of the curved shape of the tapered lower portion 13, the bottom 3 of the body 2 has a rounded outer edge that is radially spaced apart from the imaginary tube to define a substantially constant radial distance e between the rounded outer edge and the imaginary tube. The curved shape of the lower portion 13 is obtained with a relatively large radius of curvature R so that the radial distance e is significantly inferior to the half of the diameter d of the bottom 3. Accordingly, the bottom 3 is sufficiently wide to provide a good vertical stability of the container 1 when placed onto a horizontal support. Preferably, the following relation 0.8 < d/D < 0.9 is satisfied in order to have a stable bottom 3. The ratio e/h1 is comprised between 1/6 and 1/3 and preferably between 1/5 and 3/10 (and more preferably inferior to 0.29). With such a configuration, a slight curvature of the lower portion 13 is obtained and the lower portion 12 provides an additional surface for correctly gripping the container 1. It will be noted that increasing the stretching ratio for the side wall 2a is not something easy to perform when having a relatively thin side wall 2a, especially in the upper portion 12.

Referring to Figure 2, in order to have good mechanical properties in the lower portion 13 and having efficient stability of the container 1, the radial distance e may be comprised between 3 and 7 mm.

### Containers

The article can be a container, for example a container 1 used as a dairy product container, like a yogurt cup. The invention also concerns the container 1 filled with a food or non-food product, preferably a dairy product, preferably a milk-based (milk being an animal milk or a vegetal milk substitute such as soy milk or rice milk) product, preferably a fermented dairy product, for example a yogurt. The container 1 can have a yogurt cup shape, for example with a square cross section or a square with rounded corners cross section, or round cross section. The container 1 can have a tapered bottom, preferably a tapered rounded bottom. The container 1 has walls (perpendicular to the cross section), typically a tubular side wall 2a, that can be provided with elements such as stickers or banderoles 18. Elements such as banderoles 18 can contribute to re-enforcing the mechanical resistance of the container.

The container 1 filled with a food or non-food product may comprise a closure element to seal the opening 8. A flange 10 defines a support surface for attachment of the closure element to the containing part of the container 1. The closure element remains above and at a distance from the side wall 2a. A membrane seal or thin foil, optionally suitable for food contact, may form the closure element. When the container 1 is provided with a flange 10, the closure element may have the same general cut as the flange.

The container 1 can be for example a container of 50 ml (or 50 g), to 1 L (or 1 kg), for example a container of 50 ml (or 50 g) to 80 ml (or 80 g), or 80 ml (or 80 g) to 100 ml (or 100g), or 100 ml (or 100 g) to 125 ml (or 125 g), or 125 ml (or 125 g) to 150 ml (or 150 g), or 150 ml (or 150 g) to 200 ml (or 200 g), or 200 ml (or 200 g) to 250 ml (or 250 g), or 250 ml (or 250 g) to 300 ml (or 300 g), or 300 ml (or 300 g) to 500 ml (or 500 g), or 500 ml (or 500 g) to 750 ml (or 750 g), or 750 ml (or 750 g) to 1 L (or 1 kg).

### Process

The invention further relates to a process for manufacturing an article as described before, comprising the steps of mixing polylactic acid, epoxidized vegetable oil and optionally the further additives in an extruder under heating to a temperature of 150 to 250 °C and extruding or co-extruding the mixture.

Thethermoplastic material can be prepared before forming the monolayer or multilayer article or during the formation of the article. Thermoplastic materials, such as PLA, can be introduced in the form of powder, pellets or granules.

If one layer contains a mixture of several ingredients, these ingredients can be mixed upon forming the article, typically in an extruder. One can implement masterbatches of additives to be mixed with a thermoplastic material. In another embodiment one can use pre-mixed compounds typically in the form of powder, pellets or granules. Useful processes typically include a step of mixing polylactic acid, several ingredients and foaming agents, and a step of heating to activate the foaming agent. The heating temperature can be for example of from 150 °C to 250 °C, preferably from 150 °C to 200 °C. Heating can be performed during the mixing step or in a further step. Mixing and/or heating can be performed in an extruder, in an extrusion step. In a preferred embodiment of forming a multilayer thermoplastic material the layers are co-extruded, typically from respective material flows in a molten form. Co-extrusion processes are known in the art. These processes typically involve extruding separate flows through separated side by side dies. Beyond the dies the flows merge and form at least one interface. There is one interface for two-layer articles and two interfaces for three-layer articles. The materials are then cooled to form a solid article. One can implement appropriate treatments after the co-extrusion in order to obtain the desired product, for example a sheet or a film. Treatment steps are for example press treatments, calendering, or stretching. Parameters of these treatment steps such as temperatures, pressure, speed, number of treatments can be adapted to obtain the desired product, for example a sheet. In one embodiment the article is a sheet prepared by a process involving co- extruding and calendering.

In one embodiment the article is a thermoformed container obtained from a plastic sheet. The thermoformed article is preferably obtained by:
1) extrusion of a monolayer sheet or a multilayer sheet with at least layer A and layer B to obtain a multilayer plastic sheet, and
2) thermoforming the plastic sheet to obtain a container.

Thermoforming is a known operation. One can thermoform the sheet so as to obtain the final product of the desired shape. It is mentioned that some stretching occurs upon thermoforming. Thermoforming may be for example performed thanks to a Form Fill Seal (FFS) thermoforming line. The thermoforming can comprise the following steps:
- sheet introduction on guide chains (i.e. spike or jaws);
- sheet heating, by heating contact plates;
- forming thanks to a negative mould, assisted by forming plugs and air pressure. The mould may or may not comprise a label.

In a Form Fill Seal thermoforming line, one typically performs the following steps after the thermoforming:
- the resulting forms are filled with a product, and then thermosealed with a lid film,
- finally, they are cutted and optionally precutted by mechanical trimming tool.

Further details or advantages of the invention might appear in the following non limitative examples.

### Examples

The examples are implemented with using the following materials. Percentages mean percent by weight unless indicated otherwise.

### PLA :

Ingeo^{®} 2003D marketed by NatureWorks - Polylactic acid comprising 96.3 % of L-Lactide units and 3.7 % of D-Lactide units.

### ESBO:

Merginat^{®} ESBO marketed by HOBUM Oleochemicals GmbH.

### MB1:

Masterbatch of 75 % by weight of PLA and 25 % of ESBO.

### MB2 (comparative):

Masterbatch of 50 % by weight of PLA and 50 % of Biostrength^{®} 150 (core shell additive based on acrylate and methacrylate copolymer)

### Chemical foaming agent (CFA-MB):

Masterbatch of 80 % by weight of PLA and 20 % of citric acid

### Compact (non-foamed) PLA-Sheet:

Various mono-layer PLA plastic sheets are prepared according to the procedure below.

### Procedure:

The materials (PLA and MB1 or MB2) are extruded with a Fairex^{®} extruder having an internal diameter of 45 mm and a 24D length. The temperature along the screw is between 180 and 200 °C. The molten PLA is extruded through a die with temperature between 185 and 195 °C to produce a compact sheet. The sheet is then calendered on 3 rolls having a temperature of about 40 °C to control the sheet thickness.
Sheet thickness: 0.75 mm.

### Foamed PLA sheet:

Three-layer PLA expanded plastic sheets are prepared according to the following procedure.

The multilayer structure having one internal foamed PLA layer and two external compact PLA layers is produced by co-extrusion.

The materials (PLA, CFA and MB1 or MB2) of the internal foamed PLA layer are extruded with a Fairex extruder having an internal diameter of 45 mm and a 24D length. With CFA, the temperature profile along the screw is comprised between 165 and 230 °C.

The materials (PLA and MB1 or MB2) of the two external compact layers are extruded with one Scannex^{®} extruder having an internal diameter of 30 mm and a 26D length. The obtained molten plastic material is then separated in two different flows in the feedblock to form the two external compact layers. The temperature along the screw is between 165 and 195 °C. Behind the extruders, the different material flows are fed into feedblock channels through different passages separated by two thin planes (die). At the end of the separation planes, the three flows merge and form two interfaces, and the sheet is extruded through a die with a temperature of between 185 and 195 °C. The sheet is then calendered on 3 rolls having a temperature of about 40 °C. The pressure between the first and second calendar roll is maintained to zero to stabilize the foam structure and to avoid any collapsing of the expanded structure.
Sheet thickness: 0.95 mm.

### Compact PLA yogurt cups:

The compact plastic sheets are thermoformed into yogurt cups according to the procedure below. The cups are then analyzed and evaluated.

### Procedure:

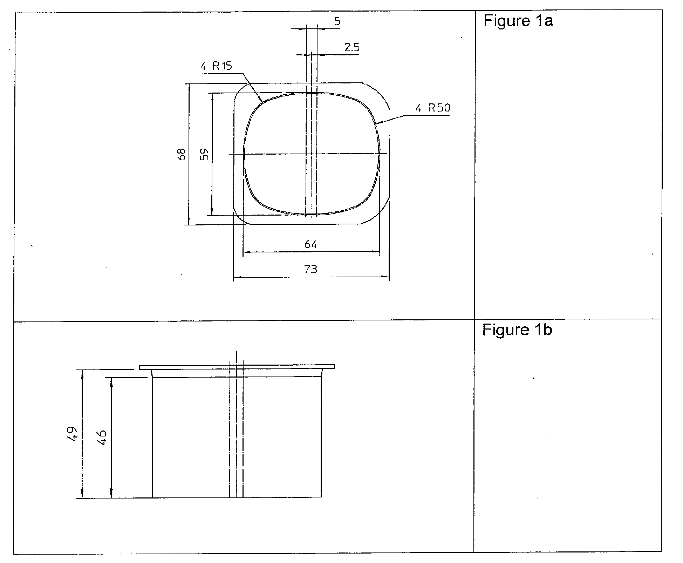

The sheet is introduced into a F.F.S. thermoforming line and is then thermoformed in 125 g cups with the following parameters:
- Heating plates temperatures: 90 °C;
- The sheet is gradually heated thanks to six heating steps, each of the heating boxes having a closing time of 140 ms;
- The thermoforming step is performed with conventional felt forming plugs;
- Mold temperature is fixed at 20 °C to cool down the PLA material;
- Forming air pressure: 4.5 bars;
- Blowing time: 450 ms
- Machine speed: 30 strokes per minute.
- Distance between bottom of mold and plug at lowest point: 3 mm
- Cup shape: As shown on Figure 1 a and Figure 1 b.
- Banderole: None.

The yogurt cups are arranged in a pack of 4 attached cups in two rows (the pack being also referred to as a "multipack") and are cut into x4 attached cups (referred to as "multipack"), with a precut line or similar junction between each pair of adjacent cups amongst the four cups. The precut lines are performed on the F.F.S. (Form Fill Seal) equipment.

### Foamed PLA yogurt cups:

The foamed plastic sheets of are thermoformed into yogurt cups according to the procedure below. The cups are then analyzed and evaluated.

### Procedure:

The sheet is introduced into a F.F.S. thermoforming line and is then thermoformed in 125 g cups with the following parameters:
- Heating plates temperatures: 110 °C;
- The sheet is gradually heated thanks to six heating steps, each of the heating boxes having a closing time of 140 ms;
- The thermoforming step is performed with conventional felt forming plugs;
- Mold temperature is fixed at 40 °C to activate the label hot melt and to cool down the PLA material;
- Forming air pressure: 4.5 bars;
- Blowing time: 450 ms
- Machine speed: 32 strokes per minute.
- Distance between bottom of mold and plug at lowest point: 5 mm
- Cup shape: As shown on Figure 2. The total stretching ratio is 5.6.
- Banderole: Yes.

The yogurt cups are arranged in a pack 14 of 4 attached cups in two rows (the pack being also referred to as a "multipack") and are cut into x4 attached cups (referred to as "multipack"), with a precut line 15 or similar junction between each pair of adjacent cups amongst the four cups, as in the example shown in Figure 3. The precut lines 15 are performed on the F.F.S. (Form Fill Seal) equipment.

### Example 1: PLA Compact

PLA Compact sheet structure (thickness in each sheet: 0.75 mm)
Example 1.1: 98.0 % PLA + 2.0% MB1 (0.5 % ESBO)
Example 1.2: 98.0 % PLA + 2.0 % MB2 (Comparative1 % Biostrength 150)

### Evaluations - Snapability:

The snap ability is determined by hand measurements with a marking scale that represents the ability of the cups to be separated under flexural solicitation:
- Mark 0 - Does not break in three solicitations or does not follow the precut line;
- Mark 1 - Breaks in three solicitations and follow precut line
- Mark 3 - Breaks in two solicitations and follow precut line;
- Mark 5 - Breaks in one solicitation and follow precut line.

Then, the snapability is compared to the precut depth to determine the minimum precut depth required to obtain a good snapability.
- The depth of the precut line is measured by optical microscopy with at least 3 measurements.

**Table 1: Snapability results for Example 1.1**

| Precut depth [%] | 45 | 48 | 54 | 57 | 58 | 62 | 70 | 71 | 76 | 83 |
|---|---|---|---|---|---|---|---|---|---|---|
| Snapability | 3 | 3 | 3 | 3 | 3 | 5 | 5 | 5 | 5 | 5 |

A precut depth of at least 58 - 63 % is needed to obtain a good snapability.

**Table 2: Snapability results for comparative Example 1.2**

| Precut depth [%] | 39 | 42 | 45 | 50 | 53 | 62 | 73 | 76 | 90 |
|---|---|---|---|---|---|---|---|---|---|
| Snapability | 3 | 3 | 3 | 3 | 5 | 5 | 5 | 5 | 5 |

A precut depth of at least about 50 - 55 % is needed to obtain a good snapability.

Conclusion: The precut depths needed to obtain a good snapability are considered as substantially equivalent for example 1.1 and comparative example 1.2, with however an amount of additive divided by two (0.5 % ESBO in example 1.1, 1 % Biostrength^{®} 150 in comparative example 1.2). Equivalent tests show that using Biostrength^{®} 150 at 0.5 % does not lead to good snapability (whatever the precut depth is).

### Example 2: PLA Foam

**Table 3: PLA foam sheet structure Example 2**

| | Layer | Layer repartition along sheet thickness | Layer repartition along sheet thickness | PLA Content | CFA masterbatch content | MB reference | MB masterbatch content |
|---|---|---|---|---|---|---|---|
| | | (% by distance) | (% by weight) | (% by weight) | (% by weight) | | (% by weight) |
| Example 2.1 | Compact | 21,0 | 25 | 98 | / | MB1 | 2 |
| | Foam | 58,0 | 50 | 97.5 | 2.5 | / | / |
| | Compact | 21,0 | 25 | 88 | / | MB1 | 2 |
| Example 2.2 (Comparative) | Compact | 21,0 | 25 | 98 | / | MB2 | 2 |
| | Foam | 58,0 | 50 | 97.5 | 2.5 | / | / |
| | Compact | 21,0 | 25 | 88 | / | MB2 | 2 |

### Evaluations - Snapability:

**Table 4: Snapability results for Example 2.1**

| | | | | | | | | |
|---|---|---|---|---|---|---|---|---|
| Precut depth [%] | 32.8 | 34.9 | 37.0 | 40.2 | 41.8 | 42.3 | ... | 62.9 |
| Snapability | 1 | 3 | 5 | 5 | 5 | 5 | ... | 5 |

A precut depth of at least 35-40% is needed to obtain a good snapability.

**Table 5: Snapability results for Example 2.2**

| Precut depth [%] | 19.6 | 25.7 | 33.9 | 39.1 | 39.9 | 41.8 | 42.5 | 44.4 | 45,4 |
|---|---|---|---|---|---|---|---|---|---|
| Snapability | 1 | 1 | 1 | 1 | 1 | 5 | 5 | 5 | 5 |
| Precut depth [%] | 48.8 | 51.8 | 52.1 | 54.2 | 55.6 | ... | 62.3 | | |
| | 5 | 5 | 5 | 5 | 5 | ... | 5 | | |

A precut depth of at least 40 - 45% is needed to obtain a good snapability.

### Example 3: Impact Resistance

PLA Compact - Injected tensile bones
- Example 3.1 98.0 % PLA + 2.0 % MB1
- Example 3.2 (comparative): 98.0 % PLA + 2.0 % MB2
- Example 3.3 (comparative): 100 % PLA

### Evaluations - impact strength

Impact strength was measured by the method of notched Izod. The specimens for measuring Notched Izod have been injection moulded on Injection moulding machine Arburg Alrounder 320 M Golden Edition to produce testing specimens for measuring according to EN ISO 179-1/1eA.

**Table 6: Impact strength Example 3**

| | Example 3.3 | Example 3.1 | Example 3.2 |
|---|---|---|---|
| Impact resistance [kJ/m²] | 2.88 | 2.70 | 3.19 |

Surprisingly it was found that no enhancement in terms of impact strength is observed with ESBO (contrary to Biostrength 150), but ESBO helps to better manage the snap ability.

### Example 4: Transparency of sheets

PLA Compact sheet structure (thickness in each sheet: 0.75 mm)
- Example 4.1: 98.0 % PLA + 2.0 % MB2 (Comparative1 % Biostrength 150)
- Example 4.2: 98.0 % PLA + 2.0 % MB1 (0.5 % ESBO)

### Evaluations - Haze-measurements.

The Haze-level is determined in allignment to standard ASTM D 1003.

The measurements were performed with a Minolta Spektrophotometer CM-3600d that geometries conform to the requirements of ASTM D 1003 Section 8: Procedure B Spectrophotometer. The software used to determine haze-levels was Spectra Magic.

The standard utilizes two different CIE standard illuminants: Sources A (typical, domestic, tungsten-filament lighting) and C (average day light). Both were used.

**Table 7: Transparency**

| | Virgin PLA | Example 4.1 | Example 4.2 |
|---|---|---|---|
| Haze [%] (Source A) | 2.6 | 53.4 | 2.7 |
| Haze [%] (Source C) | 2.7 | 56.2 | 2.9 |

### Conclusion of Examples:

The above shown examples prove that the ESBO (MB1) has a specific performance for the mentioned application. Even though it has no proven function as an impact modifier, it delivers a substantially equivalent snapability performance as a core/shell impact modifier but with twice less amount of additive and much better transparency.

## Claims

1. An article comprising a monolayer or multilayer thermoplastic material, wherein said material comprises
(i) 38.00 to 99.95 % by weight of polylactic acid,
(ii) 0.05 to 4.90 % by weight of an epoxidized vegetable oil;
(iii) 0 to 60.00 % by weight of further additives selected from the group consisting of impact modifiers, plasticisers, crosslinking agents, foaming agents, fillers, colorants, stabilizers, lubricants, and mixtures thereof,
the weight percentages being relative to total weight of the monolayer or multilayer thermoplastic material and adding up to 100 %.

2. An article as claimed in claim 1, wherein said material comprises:
(i) 88.00 to 99.85 % by weight of polylactic acid,
(ii) 0.15 to 2.00 % by weight of an epoxidized vegetable oil;
(iii) 0 to 10.00 % by weight of further additives selected from the group consisting of impact modifiers, plasticisers, crosslinking agents, foaming agents, fillers, colorants, stabilizers, lubricants, and mixtures thereof,
the weight percentages being relative to total weight of the monolayer or multilayer thermoplastic material and adding up to 100 %.

3. The article as claimed in any of claims 1 to 2, wherein the vegetable oil is a triglyceride of saturated or unsaturated fatty acid esters with a chain length from C₆ to C₂₂.

4. The article as claimed in any of the preceding claims, wherein the epoxidized vegetable oil is epoxidized soybean oil, epoxidized methyl soyate, epoxidized linseed oil, epoxidized tall oil, epoxidized peanut oil, epoxidized castor oil, epoxidized coconut oil, epoxidized palm oil, epoxidized corn oil, epoxidized safflower oil, or a mixture thereof.

5. The article as claimed in any of the preceding claims, wherein the article is a multilayer article comprising (A) at least one layer A of non-foamed polylactic acid and (B) at least one layer B of foamed polylactic acid, wherein either (A), or (B), or (A) and (B) contain the epoxidized vegetable oil.

6. The article as claimed in any of the preceding claims, being a plastic sheet.

7. The article as claimed in any of claims 1 to 6wherein the article comprises a thermoformed part, preferably having a total stretch ratio of at least 2.5.

8. The article as claimed in claim 7, wherein the article is a container.

9. The article as claimed in claim 8, being a container (1) having a hollow body (2) and optionally at least one flange (10), the hollow body defining said thermoformed part, the hollow body being provided with an opening (8).

10. The article as claimed in claim 9, wherein the hollow body (2) is at least partially covered by a banderole.

11. The article as claimed in any of claims 7 to 10, wherein the container is a cup, in a multipack form or in an individual cup form.

12. An article as claimed in any of claims 1 to 11, wherein said material consists of:
(i) 38.00 to 99.95 % by weight of polylactic acid,
(ii) 0.05 to 4.90 % by weight of an epoxidized vegetable oil;
(iii) 0 to 60.00 % by weight of further additives selected from the group consisting of impact modifiers, plasticisers, crosslinking agents, foaming agents, fillers, colorants, stabilizers, lubricants, and mixtures thereof,
the weight percentages being relative to total weight of the monolayer or multilayer thermoplastic material and adding up to 100 %.

13. A process for manufacturing an article as claimed in any of claims 1 to 12, comprising the steps of mixing polylactic acid, epoxidized vegetable oil and optionally the further additives in an extruder under heating to a temperature of 150 to 250 °C and extruding or co-extruding the mixture.

14. A process according to claim 13, further comprising a step of thermoforming.

15. The process as claimed in any of claims 13 to 14, wherein the epoxidized vegetable oil is added in form of a masterbatch.

16. Use of an epoxidized vegetable oil as a snap ability modifier in optionally thermoformed polylactic acid sheets.
